# FASCICULE DE BREVET EUROPEEN

(11) **EP 3 578 348 B1**
(45) Date de publication et mention de la délivrance du brevet: **16.02.2022**
(21) Numéro de dépôt: 19315041.4
(22) Date de dépôt: 03.06.2019
(51) Int. Cl.: B29D 35/00, B29D 35/02, A43B 7/22

(54) **PROCÉDÉ DE FABRICATION DE COMPOSANT DE CHAUSSURE SUR MESURE**
HERSTELLUNGSVERFAHREN VON SCHUHKOMPONENTE NACH MASS
METHOD FOR MAKING A SHOE COMPONENT TO MEASURE

(30) Priorité: 01.06.2018 FR 1870637
(43) Date de publication de la demande: 11.12.2019
(73) Titulaire: Lyamtech, 79000 Niort (FR)
(72) Inventeur: Liégeon, Jérôme, 79000 Niort (FR); Alaixendri, Olivier, 79000 Niort (FR)
(74) Mandataire: Fidal Innovation

(56) Documents cités:
- WO-A1-2014/100462
- WO-A1-2016/093955
- WO-A2-2017/182930
- CN-U- 206 791 805
- US-A1- 2018 008 000
- US-A1- 2018 104 922

## Description

### DOMAINE DE L'INVENTION

La présente invention se rapporte aux procédés de fabrication d'un composant dit enveloppant pour des chaussures sur mesure.

### ARRIERE-PLAN TECHNOLOGIQUE

WO 2016/093,955 et US 2018/104,922 sont des exemples de procédés de fabrication de composants personnalisés de chaussures.

Dans un premier temps, l'invention se rapporte à un procédé de fabrication de composant enveloppant pour une chaussure orthopédique. Une chaussure orthopédique comprend généralement un semelage assemblé à une tige entourant le pied d'un utilisateur. Outre le pied, on insère dans la chaussure orthopédique une orthèse, communément appelée « semelle orthopédique », amovible disposée entre le semelage de la chaussure et le pied. L'orthèse est réalisée sur mesure pour l'utilisateur, de manière à corriger compenser un défaut de posture, stabiliser l'utilisateur et le soulager. Le composant enveloppant est réalisé sur mesure à partir à la fois du pied de l'utilisateur et de l'orthèse sur-mesure. L'orthèse est réalisée amovible, de manière à pouvoir être utilisée avec plusieurs paires de chaussures différentes, ou de manière à être remplacée une fois usée, ou en cas d'évolution du besoin de correction de l'utilisateur.

Le procédé de fabrication d'une telle chaussure personnalisée comprend classiquement plusieurs étapes. Dans un premier temps, l'utilisateur prend rendez-vous chez un podo-orthésiste, qui mesure la forme du pied de l'utilisateur, et définit le besoin de l'utilisateur. Le podo-orthésiste déclenche la fabrication de la paire de chaussures orthopédiques. En parallèle, le podo-orthésiste réalise une forme tridimensionnelle correspondant à la forme du pied de l'utilisateur. Celle-ci est généralement réalisée par moulage dans un moule personnalisé propre à l'utilisateur, lui-même créé à partir de la mesure du pied de l'utilisateur faite par le podo-orthésiste. L'orthèse est réalisée par laminage de plusieurs couches planes de divers matériaux, puis mise en forme pour se conformer au moulage rigide de la forme. L'essayage par l'utilisateur de l'orthèse dans la chaussure orthopédique peut conduire à des retouches sur la forme et l'orthèse qui peuvent encore retarder de plusieurs semaines la livraison du produit définitif personnalisé à l'utilisateur.

L'invention vise ainsi à simplifier la fabrication de composants enveloppant de chaussures personnalisés.

### RESUME DE L'INVENTION

Ainsi, l'invention se rapporte à un procédé de fabrication d'un composant enveloppant pour une chaussure sur-mesure comprenant les étapes suivantes :
- à partir d'un modèle numérique du membre inférieur de l'utilisateur, la génération, au moyen d'un processeur, d'un modèle numérique d'une orthèse de la chaussure sur mesure associée au membre inférieur de l'utilisateur,
- la transmission du modèle numérique de l'orthèse de la chaussure sur mesure à un processeur d'une machine de fabrication additive ;
- la génération d'un modèle numérique de bloc correspondant à un assemblage du modèle numérique de l'orthèse de la chaussure sur mesure et du modèle numérique du membre inférieur de l'utilisateur ;
- la réalisation d'un composant enveloppant au moins en partie le bloc.

Le composant enveloppant est ainsi sur-mesure, adapté à l'orthèse associée au membre inférieur de l'utilisateur.

Grâce à ces dispositions, on simplifie la fabrication de composants de chaussure sur mesure pour un utilisateur. La mise en œuvre d'une fabrication additive permet de plus de fournir de nouvelles fonctions aux composants de chaussure, qui ne sont pas disponibles par les procédés classiques de laminage. L'utilisation du bloc permet de réaliser un composant enveloppant le bloc qui suit la surface extérieure du bloc, et qui va donc envelopper au mieux également le pied dans la chaussure pour augmenter le confort et le maintien du pied dans la chaussure.

Selon différents aspects, il est possible de prévoir l'une et/ou l'autre des dispositions ci-dessous.

Selon une réalisation, la réalisation du composant enveloppant peut comprendre les opérations suivantes :
- la réalisation d'un modèle numérique du composant enveloppant à partir d'au moins une partie de la surface extérieure du modèle numérique de bloc ;
- la transmission du modèle numérique le composant enveloppant à un processeur d'une machine de fabrication additive.

Selon une réalisation, la réalisation du composant enveloppant comprend les opérations suivantes :
- la transmission du modèle numérique de bloc à un processeur d'une machine de fabrication additive ;
- la mise en œuvre de la machine de fabrication additive pour la fabrication du bloc ;
- le recouvrement au moins en partie de la surface extérieure du bloc par un matériau adapté.

Selon une réalisation, le bloc est un bloc d'assemblage qui comprend au moins trois parties disjointes les trois parties comprenant des surfaces d'assemblage, permettant d'emboîter les parties deux à deux.

Selon une réalisation le bloc d'assemblage comprend une surface supérieure sensiblement plane destinée à servir d'appui pour une presse, et dans lequel les surfaces d'assemblage inclinée par rapport à la surface supérieure d'un angle différent de 90°. Par exemple, l'angle d'inclinaison des surfaces d'assemblage est supérieur à 70°.

Selon une réalisation, on génère un modèle numérique tridimensionnel volumique de l'orthèse.

Selon une réalisation, on génère un modèle numérique tridimensionnel volumique de de l'orthèse comprenant des éléments présentant l'une et/ou l'autre des caractéristiques suivantes :
- des épaisseurs différentes,
- des caractéristiques mécaniques de matériau différentes.

Selon une réalisation, on génère un modèle numérique de l'orthèse comprenant au moins une portion latérale s'étendant à partir d'une portion de base.

Selon une réalisation, le modèle numérique de l'orthèse comprend au moins un décaissage sur au moins une portion latérale, le procédé comprenant la fixation d'un renfort latéral dans le décaissage latéral.

Selon une réalisation, le procédé comprend la fabrication d'un semelage orthopédique rigide, destiné à être assemblé au composant enveloppant.

Selon une réalisation, une machine de fabrication additive fabrique l'orthèse.

Selon une réalisation, avant la génération du modèle numérique de l'orthèse, on numérise le membre inférieur de l'utilisateur, et on transmet au processeur des données relatives audit membre inférieur de l'utilisateur numérisé.

Selon une réalisation, on numérise le membre inférieur de l'utilisateur avec un dispositif d'acquisition des données qui comprend :
- Un support translucide, comportant une portion d'accueil rigide adaptée pour recevoir la surface inférieure d'un pied de l'utilisateur,
- Un capteur adapté pour mesurer le membre inférieur de l'utilisateur,
- Un guide adapté pour guider le capteur autour du membre inférieur.

Selon une réalisation, on génère le modèle numérique de l'orthèse associé au membre inférieur de l'utilisateur présentant une surface intérieure dont le maillage est le même que celui de la surface extérieure du modèle numérique du membre inférieur de l'utilisateur.

Selon un autre aspect, l'invention se rapporte à un programme d'ordinateur comprenant des instructions qui, lorsque le programme est exécuté par un ordinateur, conduisent celui-ci à mettre en œuvre le procédé selon l'une quelconque des revendications précédentes.

Le cas échéant, on met en œuvre un produit programme d'ordinateur comprenant ces instructions.

### BREVE DESCRIPTION DES DESSINS

Des modes de réalisation de l'invention seront décrits ci-dessous par référence aux dessins, décrits brièvement ci-dessous :
[Fig. 1] est une vue schématique de côté d'un dispositif pouvant être utilisé par un podo-orthésiste pour l'acquisition des données.
[Fig. 2] est une vue schématique tridimensionnelle en perspective de dessus d'un composant du dispositif de la figure 1.
[Fig. 3] est une vue schématique tridimensionnelle en perspective d'un modèle numérique de pied d'un utilisateur.
[Fig. 4a] est une vue schématique tridimensionnelle en perspective d'un modèle numérique de forme pour un utilisateur.
[Fig. 4b] est une vue schématique tridimensionnelle en perspective d'un modèle numérique de bloc forme+orthèse pour un utilisateur.
[Fig. 5] est une vue schématique tridimensionnelle en perspective d'un bloc forme+orthèse pour un utilisateur fabriqué par fabrication additive.
[Fig. 6] est une vue schématique tridimensionnelle en perspective d'une chaussure d'essayage réalisée sur la base du bloc de la figure 5.
[Fig. 7] est une vue schématique tridimensionnelle en perspective illustrant l'essayage de la chaussure d'essayage par l'utilisateur.
[Fig. 8] est une vue schématique tridimensionnelle en perspective d'une modèle numérique d'orthèse.
[Fig. 9a] est une vue schématique tridimensionnelle en perspective d'une orthèse pour un utilisateur fabriquée par fabrication additive.
[Fig.9b] est une vue schématique tridimensionnelle en perspective d'une orthèse selon une variante de réalisation, vu d'un premier côté.
[Fig.9c] est une vue schématique tridimensionnelle en perspective de l'orthèse de la figure 8b vu de l'autre côté.
[Fig. 10] est une vue schématique tridimensionnelle en perspective illustrant une tige d'une chaussure orthopédique.
[Fig. 11a] est une vue schématique tridimensionnelle en perspective d'un modèle numérique de semelage.
[Fig. 11b] est une vue schématique tridimensionnelle en perspective illustrant un semelage d'une chaussure orthopédique.
[Fig. 12] est une vue schématique tridimensionnelle en perspective illustrant l'essayage de la chaussure par l'utilisateur.
[Fig. 13a] est une vue schématique de côté d'un bloc d'assemblage comprenant trois parties assemblées.
[Fig. 13b] est une vue schématique tridimensionnelle du bloc de la figure 13a dans lequel les trois parties sont séparées.
[Fig.13c] est une vue de dessous du bloc de la figure 13b.
[Fig. 14] est une vue schématique tridimensionnelle en perspective d'une chaussure d'essayage réalisée, selon un deuxième mode de réalisation, par fabrication additive.
[Fig. 15] est une vue schématique tridimensionnelle en perspective d'une chaussure définitive réalisée, selon un troisième mode de réalisation, par fabrication additive.
[Fig. 16] est une vue schématique d'un système informatisé.

Sur les dessins, des références identiques désignent des objets identiques ou similaires.

### DESCRIPTION DETAILLEE

Par « utilisateur », on entend une personne consultant un spécialiste en vue d'obtenir une orthèse pour une chaussure sur mesure.

Par « technicien », on entend un spécialiste conseillant l'utilisateur pour un chaussage adapté. Le « technicien » peut être ou non un médecin ou un personnel médical.

Par « opérateur », on entend la personne utilisant la station de travail.

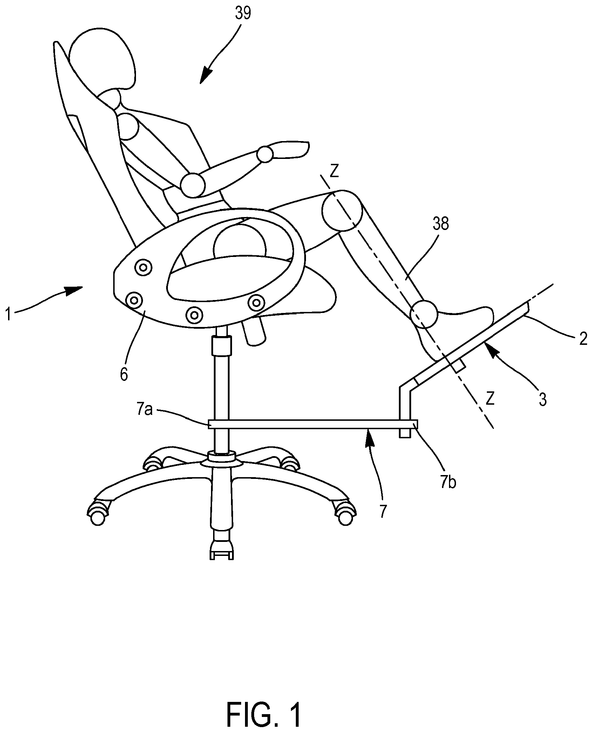

La figure 1 représente schématiquement un exemple d'un dispositif d'acquisition des données 1 selon un mode de réalisation. Un tel dispositif d'acquisition des données 1 n'est pas connu en soi, et constitue une invention indépendante de l'invention présentée dans la demande de brevet initiale. Par conséquent, le dispositif d'acquisition des données 1 pourrait également être mis en œuvre avec des procédés conventionnels de fabrication de composants enveloppant de chaussures sur mesure (par exemple orthopédiques). Le déposant se réserve tout droit de protéger par brevet le présent dispositif d'acquisition des données 1 par tout moyen adapté, y compris éventuellement par le dépôt de divisions.

Le dispositif d'acquisition des données 1 vise à permettre une grande reproductibilité de la mesure du membre inférieur 38 de l'utilisateur 39. La reproductibilité est prévue :
- entre deux mesures successives d'un même utilisateur (espacées de plusieurs mois ou plusieurs années), par exemple pour surveiller un besoin de modification de correction,
- entre deux mesures faites pour deux utilisateurs successifs par un même technicien, de manière à assurer que les membres inférieurs sont mesurés dans un même référentiel,
- entre deux mesures faites avec des dispositifs d'acquisition des données 1 distincts (par exemple en deux cabinets distincts, par exemple en cas de déménagement d'un utilisateur).

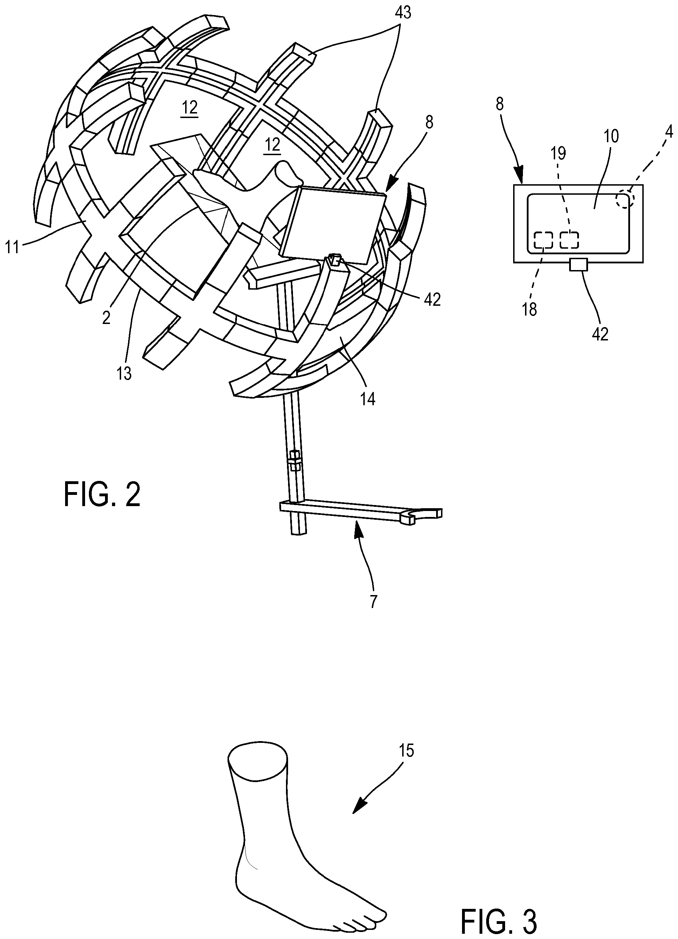

Le dispositif d'acquisition des données 1 comprend :
- Un support 2 translucide, comportant une portion d'accueil 3 rigide sur laquelle l'utilisateur peut placer la surface inférieure de son pied,
- Un capteur 4 (figure 2) adapté pour mesurer le membre inférieur de l'utilisateur,
- Un guide 5 (figure 2) pour guider le capteur 4 autour du membre inférieur, de manière à obtenir une mesure reproductible du membre inférieur.

Selon un exemple de réalisation, le dispositif d'acquisition des données 1 comprend un siège 6 sur lequel l'utilisateur peut s'asseoir lors de la mesure. Le support 2 est assemblé au siège 6 par un organe de liaison 7 de manière que l'utilisateur peut poser son pied sur le support 2 en étant assis dans le siège 6. L'organe de liaison 7 permet de s'adapter aux morphologies des différents utilisateurs. Ainsi, lorsque l'utilisateur est assis dans le siège 6, le pied exerce une pression sur le support 2. L'utilisateur étant assis et non debout, le pied ne supporte pas le poids total de l'utilisateur, qui est donc en « demi-charge ». Ainsi, la forme du pied sur le support correspond à la forme du pied lorsqu'il ne supporte pas entièrement le poids de l'utilisateur, c'est-à-dire lorsqu'il n'est pas en charge complète. En effet, lorsque le pied est en charge complète, le pied prend une forme qui présente les éventuels défauts que l'on cherche à corriger.

Le support 2 est positionné, par rapport au siège 6, de manière à ce que le membre inférieur soit positionné et orienté d'une manière particulière. Par exemple, le support 2 porte un référentiel illustrant une position et une orientation du pied, tel que par exemple une marque indiquant où l'utilisateur doit poser son talon, et un axe indiquant l'axe du pied. De plus, le technicien positionne le support 2 de manière à ce que l'axe talon-genou de la jambe de l'utilisateur s'étende selon une normale Z-Z à la surface place supérieure du support 2.

Selon un exemple de réalisation, l'organe de liaison 7 comprend une barre télescopique dont la longueur peut varier entre ses deux extrémités 7a et 7b. L'extrémité 7a, liée au siège 1, permet une rotation de la barre autour de l'axe vertical du pied du siège 1, de manière à pouvoir positionner le support 2 pour chacun des deux pieds. Le cas échéant, l'extrémité 7a peut également être mobile verticalement le long du pied du siège (en variante, l'assise du siège est réglable en hauteur par rapport l'extrémité 7a). On choisit tout moyen de fixation adapté, tel que par friction ou par un mécanisme de verrouillage. L'extrémité 7b est liée au support 2, par exemple de manière rigide.

Le capteur 4 est par exemple une caméra optique. Pour l'exemple représenté, on peut utiliser un dispositif portatif de mesure 8 comprenant une tablette 9 informatique comprenant un microprocesseur 19, le capteur 4, et un écran 10. Le guide 5 comprend une glissière 11 adaptée pour coopérer avec la tablette 9 pour guider celle-ci de manière reproductible selon une séquence d'acquisition prédéfinie. La glissière 11 est de préférence fixe par rapport au support 2 tout le long de la séquence d'acquisition, par exemple en étant solidaire de l'organe 7 de liaison, la tablette 9 se déplaçant le long de la de la glissière 11. La séquence d'acquisition prédéfinie permet d'acquérir un ensemble d'images permettant de réaliser un modèle numérique du membre inférieur de l'utilisateur. Cette séquence implique de déplacer le capteur tout autour du pied de l'utilisateur. On prévoit par exemple un ensemble de secteurs 12 répartis angulairement autour de l'axe Z-Z de la jambe de l'utilisateur. Dans chaque secteur, le capteur 4 peut être déplacé de haut en bas. Le support 2 est translucide de manière à ne pas gêner l'acquisition optique, qui se fait partiellement à travers le support 2. Selon l'exemple de réalisation, l'orientation du capteur est modifiée, au cours de l'acquisition, de manière à ce que le capteur pointe toujours vers un même point de référence, situé par exemple au centre du support 2. Pour cela, la glissière 11 comporte une base 13 présentant une courbure constante autour du support 2, et des extensions 43, également courbées, vers le haut et le bas, par rapport à la base 13. Un organe de guidage 42 solidaire de la tablette 9 coopère avec la glissière 11 pour guider la tablette 9 selon la séquence d'acquisition. En variante, ce guidage pourrait être motorisé selon une séquence préprogrammée.

Le capteur 4 comprend par exemple un capteur de profondeur. On peut envisager par exemple une mesure stéréoscopique si le capteur 4 comprend une paire de caméras calibrées dont la relation géométrique est connue. Le cas échéant, étant donné que le capteur est déplacé autour du pied pour prendre une succession d'images, une caméra unique peut suffire, deux images successives en deux positions différentes pouvant être assimilées à deux images simultanées décalées géométriquement.

Le guide 5 comporte également une fenêtre 14. La fenêtre 14 permet d'insérer le capteur 4 dans le guide 5 en vue de faire la mesure, et de l'en retirer une fois la mesure effectuée. La fenêtre 14 permet également la liaison du support 2 à l'organe de liaison 7.

L'écran 10, qui est disposé sur la face de la tablette opposée à la face portant le capteur 4, permet au technicien de contrôler visuellement l'acquisition au cours de celle-ci.

Alternativement, on prévoit un capteur 4 utilisé pour la prise d'images, et dissocié de la tablette 9, qui reste à demeure à disposition du technicien qui l'utilise pour contrôler l'acquisition.

Le dispositif de mesure 8 comprend également un système de communication 18 permettant de transmettre les données mesurées vers une station de travail 17 distante. Le système de communication 18 peut comprendre tout moyen approprié, comme par exemple des systèmes de communication filaire ou sans fil, communiquant avec la station de travail 17 par l'intermédiaire de réseaux.

La figure 3 représente schématiquement un modèle numérique 15 du membre inférieur de l'utilisateur, obtenu à partir de la numérisation réalisée au moyen du dispositif d'acquisition de données. La description qui suit, relative à la fabrication d'un composant de chaussure orthopédique sur mesure, peut être appliquée à tout modèle numérique du membre inférieur de l'utilisateur, que celui-ci ait été acquis par les moyens originaux décrits ci-dessus, ou par d'autres moyens. A titre illustratif, concernant ces autres moyens, on peut envisager l'acquisition par une caméra optique à détection de profondeur déplacée librement (sans être guidée) par le technicien. Egalement, l'acquisition peut être réalisée avec l'utilisateur dans une autre position. Le dispositif d'acquisition décrit ci-dessus selon le mode de réalisation des figures 1 et 2 permet une bonne reproductibilité de la mesure.

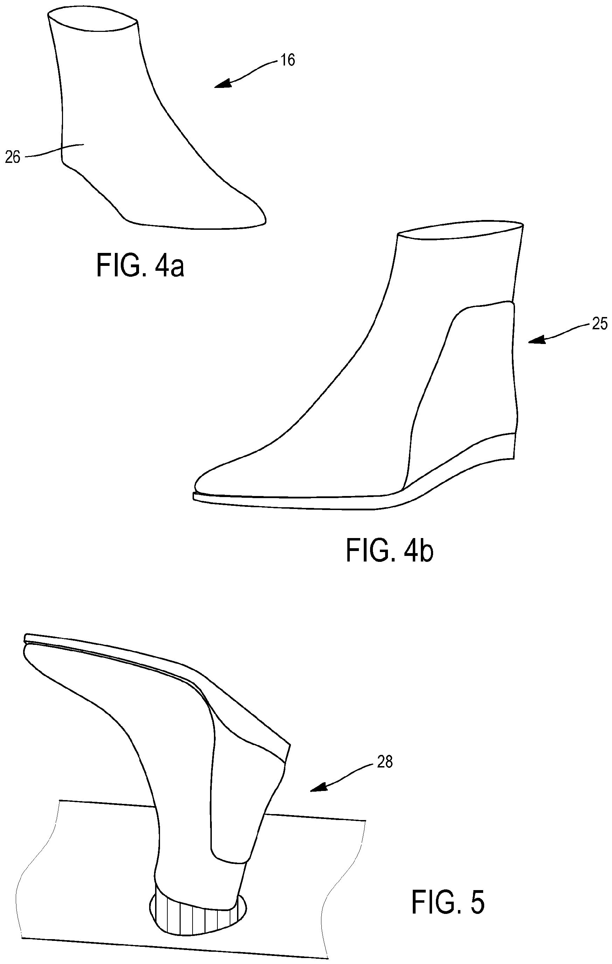

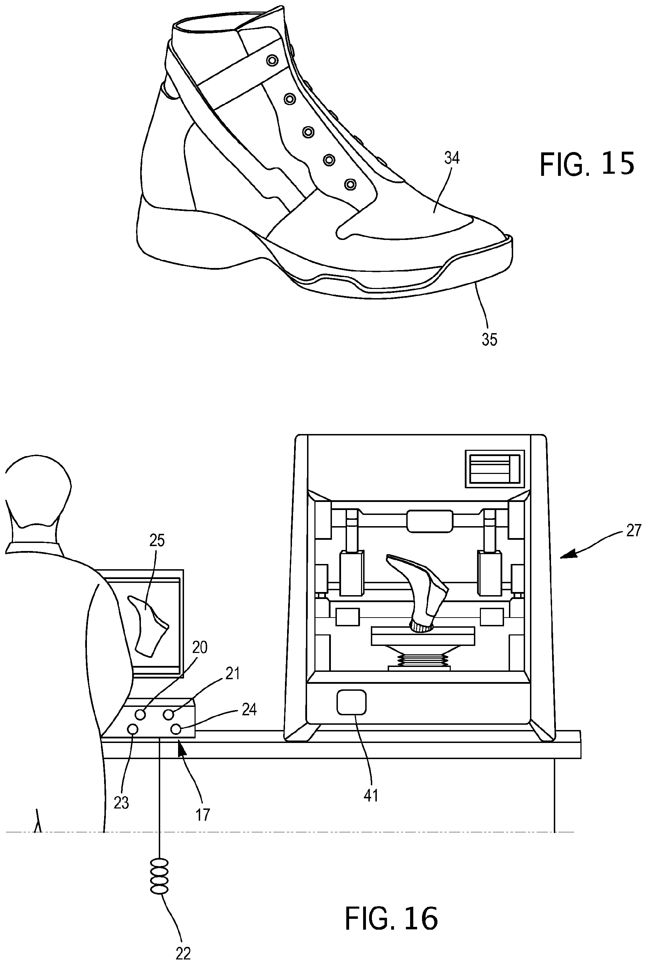

La figure 4a représente schématiquement un modèle numérique 16 de forme personnalisée à l'utilisateur. Le système comprend une station de travail 17, représentée sur la figure 15. La station de travail 17 comprend un processeur 20, et un système de communication 21 adapté pour communiquer avec des systèmes distants par tout moyen adapté, filaire ou sans fil, par l'intermédiaire de réseaux. En particulier, le système de communication 21 est configuré pour recevoir des données en provenance du dispositif de mesure 8.

La station de travail 17 est adaptée pour générer un modèle numérique 16 de forme personnalisée à l'utilisateur. Par « forme », on entend une représentation du membre inférieur de l'utilisateur en situation où le pied supporte une partie du poids de l'utilisateur. C'est-à-dire que le modèle numérique 16 de forme est proche de la géométrie du pied de l'utilisateur, telle que déterminée par le dispositif de mesure 8, c'est-à-dire en demi-charge. Selon un exemple, le processeur 20 de la station de travail 17 accède à une base de données 22 qui stocke en mémoire une bibliothèque de modèles numériques de formes pré-établis, correspondant à des typologies de membres inférieurs différents, des pointures différentes, voire des pathologies différentes. Ainsi, le modèle numérique 16 de forme personnalisée à l'utilisateur, représenté sur la figure 4a, peut être choisi comme celui considéré comme la plus proche géométrie du pied de l'utilisateur parmi les modèles disponibles dans la bibliothèque. « La plus proche » peut par exemple être déterminé par un opérateur de la station de travail, par exemple en comparant visuellement un candidat modèle numérique de forme avec le modèle numérique 15 du pied de l'utilisateur, ou par des moyens informatiques de calcul. Le cas échéant, la bibliothèque comprend des modèles numériques de bouts de forme qui peuvent être assemblés les uns aux autres pour générer le modèle numérique 16 de forme personnalisée à l'utilisateur.

Le cas échéant, le modèle numérique 16 de forme sélectionné dans la bibliothèque peut ensuite être modifié par l'opérateur pour mieux correspondre au modèle numérique 15 du membre inférieur de l'utilisateur. Par exemple, le modèle numérique 16 de forme comprend un ensemble d'éléments géométriques unitaires, par exemple des éléments surfaciques ou volumiques. La station de travail 17 comprend un module logiciel d'édition 23 permettant d'éditer le modèle numérique 16 de forme pour le faire correspondre au modèle numérique 15 du membre inférieur de l'utilisateur. Il s'agit par exemple de déplacer les éléments géométriques unitaires, ou les sommets de ceux-ci.

A partir du modèle numérique 16 de forme, une chaussure sur-mesure pour l'utilisateur peut être fabriquée.

Par exemple, la station de travail 17 comporte également un module logiciel de génération 24, adapté pour la génération d'un modèle numérique d'une orthèse pour la chaussure associé au membre inférieur de l'utilisateur, l'orthèse étant l'élément qui permettra au moins en partie de corriger les défauts de l'utilisateur détectés à partir du modèle numérique 16 de forme. La figure 4b représente ainsi schématiquement un modèle numérique 25 de bloc correspondant à l'assemblage du modèle numérique 16 de forme décrit ci-dessus et d'un modèle numérique d'orthèse. Le modèle numérique d'orthèse est généré à partir du modèle numérique 16 de forme. Par exemple, le modèle numérique d'orthèse comprend un ensemble d'éléments géométriques unitaires qui sont générés à partir des éléments géométriques unitaires du modèle numérique 16 de forme. Par exemple, on utilise des éléments géométriques unitaires volumiques, dont une surface au contact du modèle numérique 16 de forme est identique à la géométrie, en cet endroit, d'un élément géométrique correspondant du modèle numérique 16 de forme. Le modèle numérique 30 d'orthèse présente une surface intérieure dont le maillage est le même que celui de la surface extérieure du modèle numérique 16 de forme. Les éléments géométriques unitaires volumiques du modèle numérique d'orthèse sont générés par maillage à partir de cette surface intérieure. Le modèle numérique 15 du membre inférieur ayant été obtenu avec le pied en demi-charge grâce au dispositif d'acquisition des données 1, le modèle numérique 30 d'orthèse peut être adapté au mieux afin de compenser la forme du pied pour qu'il soit correctement soutenu lorsqu'il est en charge complète.

A partir du modèle numérique 25 de bloc, la chaussure sur-mesure peut être fabriquée simplement, en intégrant l'orthèse de chaussure sur-mesure. En effet, comme le modèle numérique 25 de bloc intègre l'orthèse qui va compenser les défauts du pied de l'utilisateur, un composant enveloppant au moins en partie le bloc peut être fabriqué, soit à partir du modèle numérique 25 du bloc, soit à partir du bloc 28 une fois fabriqué, comme cela sera explicité ci-dessous. Le composant enveloppant désigne ici au moins la tige de la chaussure, c'est-à-dire l'élément destiné à recouvrir le pied sauf la plante du pied, et à maintenir le pied sur le semelage. Le composant enveloppant est en contact avec les bords latéraux de l'orthèse lorsque cette dernière est glissée dans la chaussure, mais peut également comprendre le semelage qui est en contact avec une surface inférieure de l'orthèse.

Ainsi, la chaussure sur-mesure comprend non seulement une orthèse pour compenser les défauts, mais peut également intégrer une tige et un semelage adaptés à l'orthèse de chaussure en question.

Selon un premier exemple de réalisation, on définit par exemple une épaisseur pour le modèle numérique 30 d'orthèse, et celui-ci est généré pour respecter cette épaisseur constante. L'épaisseur peut être prédéterminée, ou déterminée par l'opérateur. Le module logiciel d'édition 23 permet d'éditer le modèle numérique d'orthèse jusqu'à obtention d'un modèle satisfaisant. Le module logiciel d'édition 23 permet notamment :
- De modifier localement l'épaisseur du modèle numérique d'orthèse - ce sera le cas par exemple s'il est nécessaire d'augmenter l'épaisseur de l'orthèse en certains endroits, par exemple sous la plante du pied pour obtenir une compensation plus appropriée,
- Voire, le cas échéant, de supprimer certains éléments du modèle numérique d'orthèse, si ceux-ci sont inutiles - ce sera le cas par exemple s'il n'est pas utile que l'orthèse s'étende sous tout le pied de l'utilisateur, mais seulement sous une partie de celui-ci (par exemple pas sous les orteils),
- De caractériser le matériau constitutif de l'orthèse, voire d'affecter différents matériaux à différentes zones de l'orthèse - ce sera le cas par exemple pour obtenir des caractéristiques mécaniques différentes en différents emplacements, pour une réponse mécanique adaptée de l'orthèse (raideur, rigidité, et/ou visco-élasticité différentes en différentes régions),
- le cas échéant, d'ajouter certains éléments au modèle numérique d'orthèse, par exemple si celle-ci comporte des composants en plus de la semelle, comme par exemple des renforts latéraux, l'ajout d'éléments pouvant être faits à partir d'une zone 26 du modèle numérique 16 de forme dessinée par l'opérateur, par maillage comme décrit ci-dessus pour la partie semelle proprement dite.

On obtient ainsi un modèle numérique 25 de bloc correspondant à l'assemblage du modèle numérique 16 de forme et du modèle numérique 30 d'orthèse. Le modèle numérique 25 de bloc est d'un seul tenant, les modèles numériques de forme et d'orthèse présentant une surface commune au niveau de laquelle les modèles sont confondus.

Selon ce mode de réalisation, le modèle numérique 25 de bloc est utilisé pour réaliser une chaussure d'essayage personnalisée à l'utilisateur, de manière qui va être décrite ci-après.

Comme visible sur la figure 15, la station de travail 17 est connectée à une machine de fabrication additive 27. La machine de fabrication additive 27 est par exemple une imprimante tridimensionnelle. La station de travail 17 est connectée à la machine de fabrication additive 27, et transmet à celle-ci des informations relatives à un modèle numérique, de manière à ce que la machine de fabrication additive 27 fabrique un objet conforme au modèle. La machine de fabrication additive 27 comporte ainsi un processeur 41 adapté pour contrôler la fabrication à partir de données d'entrées.

Dans le cas d'espèce, la station de travail 17 transmet à la machine de fabrication additive 27 des informations relatives au modèle numérique 25 de bloc, de manière à ce que la machine de fabrication additive 27 fabrique un bloc 28 correspondant à l'assemblage d'un seul tenant de la forme et de l'orthèse. Le bloc 28 est visible sur la figure 5. Le bloc 28 est par exemple réalisé en un matériau unique. Si le modèle d'orthèse comprend plusieurs matériaux, ce n'est pas pris en compte à ce stade. Le bloc 28 est par exemple réalisé en un matériau rigide. Le bloc 28 est par exemple réalisé en un matériau opaque.

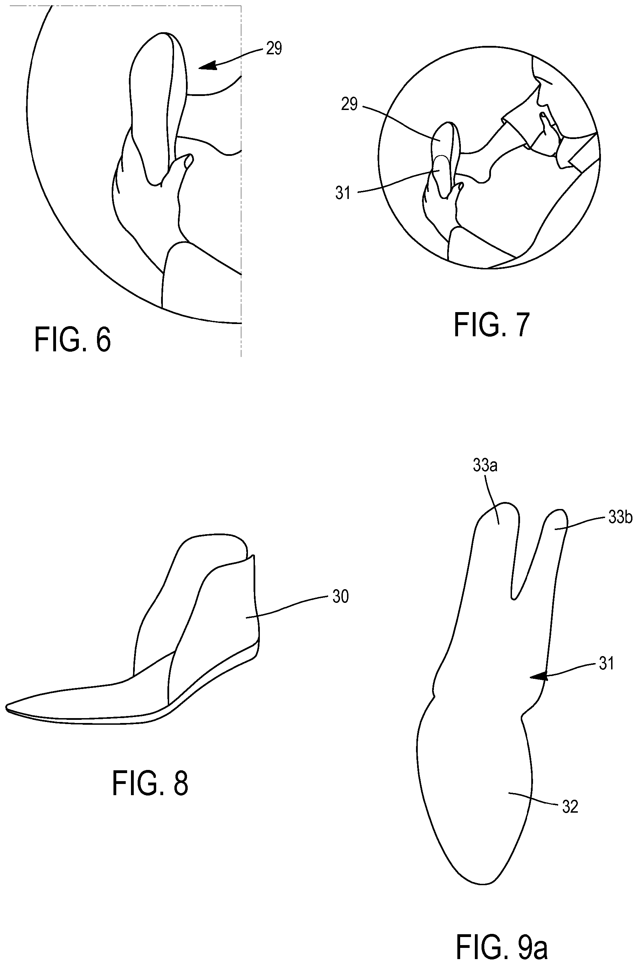

On réalise l'enveloppe 29 de la chaussure d'essayage de manière appropriée à partir du bloc 28. Par exemple, on entoure entièrement le bloc 28 d'un matériau souple en lanières, de manière à simuler l'enveloppe d'une chaussure, comprenant la tige et éventuellement une surface faisant office de semelage. On peut par exemple utiliser un matériau translucide. L'enveloppe 29 de la chaussure d'essayage obtenue est représentée sur la figure 6.

On réalise aussi la semelle orthopédique amovible (orthèse) à ce stade. Selon cet exemple de réalisation, l'orthèse 31 est réalisée sur mesure par fabrication additive.

A cette fin, on dispose, au niveau de la station de travail 17, du modèle numérique d'orthèse 30, issu du modèle numérique 25 de bloc. Le modèle numérique d'orthèse 30 peut être obtenu facilement en retranchant du modèle numérique 25 de bloc le modèle numérique 16 de forme, ou en ayant été enregistré en tant que tel avant son association avec le modèle numérique 16 de forme. Le modèle numérique 30 d'orthèse est représenté sur la figure 8.

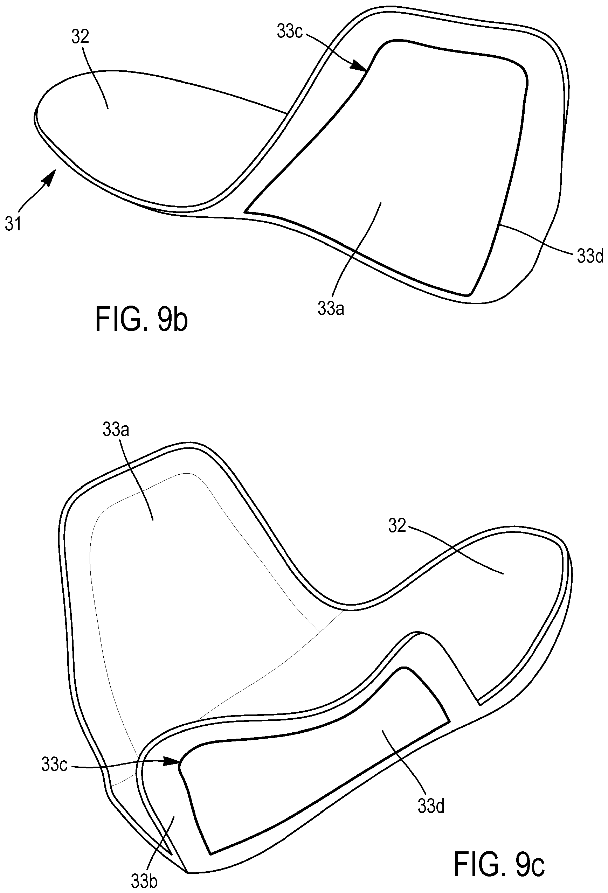

Dans le cas d'espèce, la station de travail 17 transmet à la machine de fabrication additive 27 des informations relatives au modèle numérique 30 d'orthèse, de manière à ce que la machine de fabrication additive 27 fabrique une orthèse 31. L'orthèse 31 peut être réalisée en matériaux translucides. L'orthèse 31 est visible sur la figure 9. Dans l'exemple présenté, l'orthèse 31 comprend une portion de base 32, et deux portions latérales 33a, 33b, s'étendant verticalement vers le haut à partir de la portion de base 32, et destinées à venir supporter la cheville du utilisateur. De plus, dans l'exemple présenté, la portion de base 32 de l'orthèse 31 présente différentes épaisseurs en différents endroits, ce qui peut être obtenu de manière beaucoup plus reproductible en fabrication additive qu'en laminage.

L'utilisation de la technologie de fabrication additive permet de fabriquer des orthèses ayant des propriétés particulières de manière précise.

Notamment, selon les pathologies de l'utilisateur, l'orthèse 31 peut devoir présenter des renforts latéraux, également appelés tuteurs, d'une rigidité particulière afin d'apporter plus de tenue sur les côtés latéraux du pied. Un exemple d'orthèse 31 avec renforts latéraux est représenté sur les figures 9b et 9c. A cet effet, l'orthèse 31 comprend, comme précédemment, une portion 32 de base et deux portions latérales 33a, 33b. A la différence de précédemment, lors de la fabrication additive, une ou les deux portions latérales 33a, 33b sont formées avec un décaissage 33c, sur une surface déterminée, du côté extérieur de l'orthèse, c'est-à-dire du côté qui n'est pas en contact avec le pied de l'utilisateur. Puis, une fois l'étape de fabrication additive terminée, un renfort latéral **33d** est fixé sur le décaissage 33c. De préférence, l'épaisseur du renfort latéral 33d est prévue pour qu'il affleure avec le reste de la portion latérale 33a, 33b. Le renfort latéral 33d est par exemple réalisé en matériau thermoformable, telle qu'une résine tramée, qui est découpé en fonction des dimensions du décaissage 33c, chauffé pour suivre la courbure de la surface du décaissage 33c sur laquelle il est appliqué, et fixé par exemple par collage. Le matériau du renfort latéral 33d et ses dimensions sont choisis en fonction de la rigidité souhaitée pour l'utilisateur.

L'orthèse 31 peut alors être glissée dans l'enveloppe 29, pour former la chaussure d'essayage. A ce stade, l'enveloppe 29 peut déjà comprendre un semelage, de manière à former la chaussure d'essayage entièrement, ou un semelage est assemblé à l'enveloppe 29 comme cela sera vu plus loin.

L'enveloppe 29 et l'orthèse 31 sont expédiées au technicien qui, lors d'un rendez-vous ultérieur avec l'utilisateur, procède à l'essayage. Si l'enveloppe 29 de la chaussure d'essayage est réalisée translucide, le technicien peut observer les points d'appui du pied sur l'orthèse 31 au cours de cet essayage.

Si l'essayage est satisfaisant, on peut procéder à la fabrication des orthèses et des chaussures orthopédiques, comme cela sera décrit plus loin.

Si l'essayage n'est pas satisfaisant, des informations d'adaptation sont transmises à l'opérateur, qui peut adapter le modèle numérique 25 du bloc (c'est-à-dire de la forme et/ou de l'orthèse) en fonction, puis imprime un nouveau bloc 28. Le nouveau bloc 28 est alors utilisé pour réaliser la chaussure finale, comme cela sera décrit plus loin. Si le modèle numérique 30 d'orthèse comprend plusieurs matériaux, on met en oeuvre une fabrication additive multi-matériaux, en fonction des informations contenues dans le modèle. Ceci permet par exemple de réaliser des portions présentant différentes caractéristiques mécaniques en différents endroits. L'orthèse 31 est par exemple réalisée en matériau(x) souples. Elle peut être réalisée en matériau(x) opaque(s). De plus, la version antérieure du bloc 28 est recyclée.

Selon une variante de réalisation, plutôt que de réaliser directement le bloc 28 et l'orthèse 31 définitifs, pour la chaussure finale, à ce stade, on procède à nouveau aux étapes d'essayage et de modification décrites ci-dessus, jusqu'à ce que l'essayage soit satisfaisant.

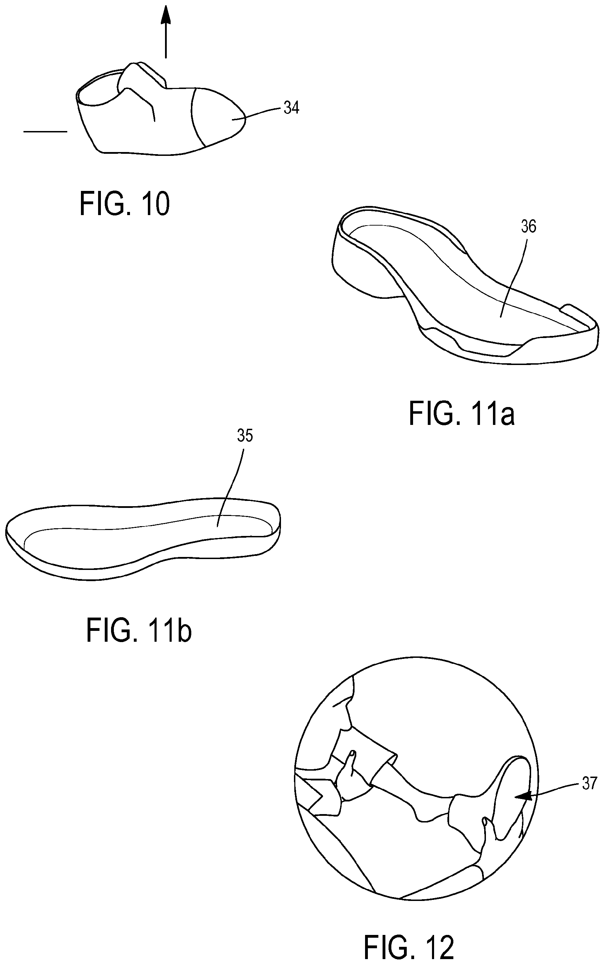

On fabrique également la chaussure orthopédique finale à partir du résultat satisfaisant de l'essayage. Ce procédé inclut par exemple la génération d'un modèle numérique de chaussure à partir du modèle numérique 25 de bloc éventuellement corrigé lors des essayages. Par exemple, le modèle numérique de chaussure comprend un composant enveloppant généré à partir du modèle numérique 25 de bloc, comme décrit précédemment pour la chaussure d'essayage. Puis, la chaussure finale est fabriquée par toute méthode connue. Notamment, la fabrication de la chaussure peut comprendre la réalisation d'un patron pour la tige de la chaussure, la tige étant sur mesure pour s'adapter à la fois à la forme du pied de l'utilisateur, mais également à l'orthèse personnalisée, la coupe et le traitement du patron en vue de réaliser la tige 34, comme visible sur la figure 10. La chaussure finale peut en variante être fabriquée par fabrication additive, en transmettant le modèle numérique de chaussure au processeur 41 d'une machine de fabrication additive 27.

Ce procédé inclut également la fabrication du semelage 35 de la chaussure finale, qui sera décrite plus en détail ci-après. Pour la fabrication du semelage 35 de la chaussure, on peut utiliser la station de travail 17. On peut réaliser un modèle numérique 36 du semelage de la chaussure à partir du modèle numérique d'orthèse, comme visible sur la figure 11a. Par exemple, la forme de la surface supérieure du modèle numérique 36 du semelage de la chaussure est obtenue à partir de la forme de la surface inférieure du modèle numérique 30 d'orthèse, de la même manière que décrit ci-dessus pour le modèle d'orthèse à partir du modèle de forme.

A partir du modèle numérique 36 du semelage de la chaussure, on peut réaliser le semelage 35 de manière appropriée, comme représenté sur la figure 11b. La chaussure orthopédique 37, visible sur la figure 12 est obtenue par enfilage de la tige 34 sur le bloc 28 et assemblage du semelage 35 à la tige 34. Elle peut être envoyée à l'utilisateur ou au technicien. Si ce dernier reçoit la chaussure et l'orthèse, on peut procéder à un ultime essayage avec l'utilisateur au cours d'un rendez-vous ultérieur.

La chaussure finale correspond alors à l'assemblage de la tige 34, de l'orthèse 31 et du semelage 35. L'assemblage peut comprendre en particulier une étape de collage de la tige 34 sur le semelage 35.

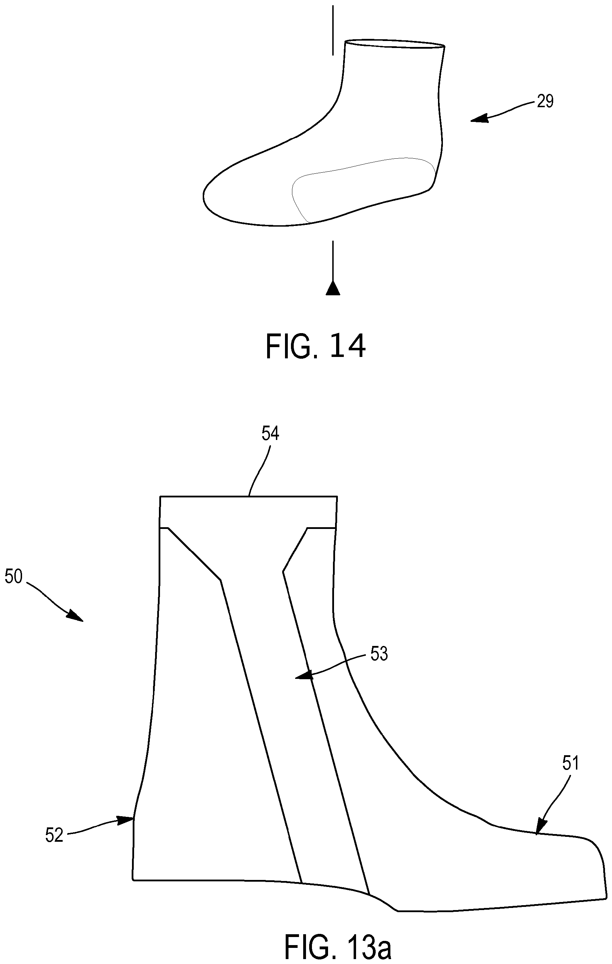

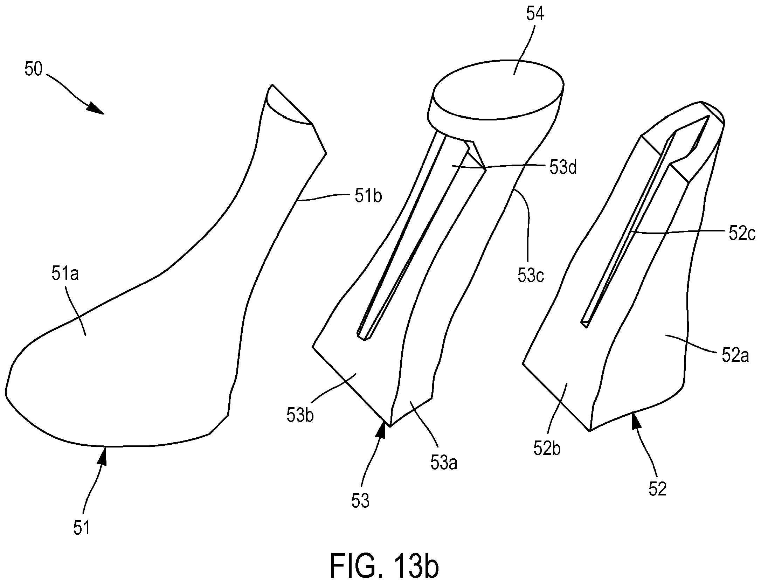

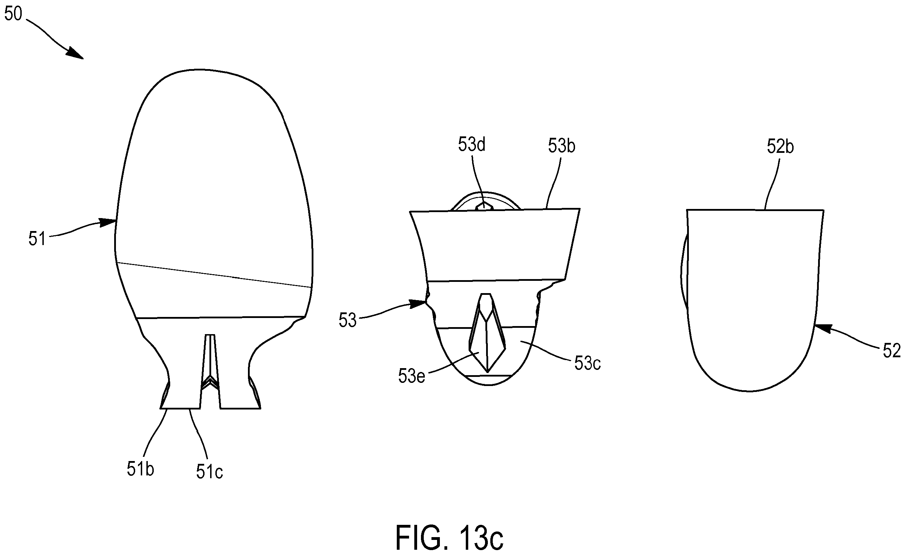

A cette fin, un bloc **50** d'assemblage de la chaussure est prévu (figures 13a, 13b et 13c). Le bloc 50 d'assemblage est réalisé à partir du modèle numérique 25 de bloc, qui est alors découpé en au moins trois parties **51, 52, 53,** qui s'emboîtent deux à deux. Plus précisément, une première partie 51 correspond au bout à l'avant de la chaussure, une deuxième partie 52 correspond au talon à l'arrière de la chaussure, et une troisième partie 53 relie la première partie 51 à la deuxième partie 52. De préférence, la troisième partie 53 est prévue pour émerger en partie par l'ouverture de la tige lorsque le bloc 50 d'assemblage est en position dans la chaussure.

Plus précisément encore, la première partie 51 comprend une surface **51a** principale, qui reprend la portion de la surface extérieure du modèle numérique 25 de bloc correspondant au bout avant, et une surface **51b** d'assemblage. La surface 51b d'assemblage comprend notamment une rainure **51c.** De manière similaire, la deuxième partie 52 comprend une surface **52b** principale qui reprend la portion de la surface extérieure du modèle numérique 25 de bloc correspondant au talon arrière, et une surface **52b** d'assemblage qui comprend notamment une rainure **52c.** La troisième partie 53 comprend alors une surface **53a** principale qui reprend la portion restante, entre le bout avant et le talon arrière, de la surface extérieure du modèle numérique 25 de bloc, et deux surfaces **53b, 53c** d'assemblage. Chaque surface d'assemblage 53b, 53c présente une nervure **53d, 53e** en saillie, de forme complémentaire aux rainures 51c, 52c de la première partie 51 et de la deuxième partie 52. Ainsi, la rainure 51c de la première partie peut être insérée par glissement dans une première rainure 53d de la troisième partie 53 et la rainure 52c de la deuxième partie peut être insérée par glissement dans l'autre nervure 53e de la troisième partie 53. Chaque nervure 53c, 53d est conformée de manière à correspondre spécialement soit à la rainure 51c de la première partie 51 soit à la rainure 52c de la deuxième partie, de manière à éviter les erreurs d'assemblage des trois parties.

Le bloc 50 d'assemblage comprend en outre une surface 54 supérieure sensiblement plane, destinée à émerger hors de la chaussure par l'ouverture de la tige, et sur laquelle une presse peut être appliquée. La surface 54 supérieure est par exemple formée sur la troisième partie 53. Les surfaces 51b, 52b, 53b et 53c d'assemblage sont alors de préférence inclinées par rapport à la surface 54 supérieure d'un angle différent de 90°. Selon un mode de réalisation, cet angle d'inclinaison est supérieur à 70°, de préférence inférieur à 80°, et de préférence encore compris entre 72° et 78°. L'inclinaison des surfaces 51b, 52b, 53b et 53c d'assemblage est avantageusement dirigée vers le bout avant à partir de la surface 54 supérieure.

Le bloc 50 d'assemblage peut ainsi remplacer le bloc 28 d'un seul tenant précédemment mentionné pour former le composant enveloppant autour du bloc 50 d'assemblage. En conservant le bloc 50 d'assemblage en place avec le composant enveloppant, le composant enveloppant peut être positionné sur le semelage 35 pour l'assemblage par collage. Une presse est alors appliquée sur la surface 54 supérieure du bloc 50 d'assemblage pour exercer une pression le temps que le collage soit effectif. L'inclinaison des surfaces 51b, 52b, 53b, 53c d'assemblage par rapport à la surface 54 supérieure assure que les trois parties 51, 52, 53 ne se séparent pas lors de l'application de la pression par la presse. Puis, en séparant les trois parties 51, 52, 53, le bloc 50 d'assemblage 50 est retiré aisément de la chaussure, sans devoir prévoir d'étape supplémentaire pour refermer la tige. Ainsi, la troisième partie 53 est d'abord extraite de la chaussure en la saisissant au niveau de la surface 54 supérieure émergeante, ses deux surfaces 53b et 53c d'assemblage glissant sur les surfaces 51b, 52b d'assemblage des deux autres parties 51, 52.

Le bloc 50 d'assemblage peut être utilisé aussi bien pour assembler une chaussure d'essayage qu'une chaussure finale.

Le procédé qui a été décrit ci-dessus peut être fait en parallèle pour les deux pieds, auquel cas on génère une paire de semelles orthopédiques et une paire de chaussures.

Dans certains cas, l'utilisateur dispose déjà de chaussures orthopédiques, et l'examen chez le technicien révèle que son pied n'a pas notablement évolué, de sorte qu'on peut continuer d'utiliser le bloc 28 ou le bloc 50 d'assemblage réalisé lors d'un examen antérieur pour la conception des chaussures. Le modèle numérique 30 d'orthèse peut toutefois être retouché pour prendre en compte une modification du besoin de correction, ou une demande de l'utilisateur vis-à-vis de ses orthèses actuelles. On fabrique alors directement l'orthèse 31 par fabrication additive.

Selon un deuxième mode de réalisation, comme représenté sur la figure 13, on met en œuvre le procédé ci-dessus, qui n'est pas décrit à nouveau en détail. A la différence du premier mode de réalisation, on fabrique la tige de la chaussure d'essayage par fabrication additive. En la station de travail 17, à partir du modèle numérique 25 de bloc, on réalise un modèle numérique de la tige comme composant enveloppant (non représenté). Celui-ci peut être obtenu par exemple à partir d'une surface intérieure correspondant à la surface extérieure du modèle numérique 25 de bloc, comme expliqué ci-dessus pour la génération du modèle d'orthèse à partir du modèle de forme. La tige est conservée suffisamment ouverte pour permettre d'introduire le pied dans la chaussure d'essayage 29. Le matériau utilisé pour la fabrication peut être un matériau transparent. Les modifications apportées suite aux différents essayages de la chaussure d'essayage 29, c'est-à-dire à la tige et/ou à l'orthèse, peuvent être reportées sur le modèle numérique 25 de bloc, afin de réaliser un nouveau modèle numérique de tige corrigé, et de fabriquer par fabrication additive une chaussure d'essayage 29 corrigée, en fonction des essayages. Les différentes chaussures d'essayage 29 peuvent ainsi être fabriquées rapidement et à moindre coût comparé aux techniques traditionnelles.

Ainsi, selon ce deuxième mode de réalisation, plusieurs chaussures d'essayage 29 peuvent être fabriquées par fabrication additive pour s'adapter au mieux au pied de l'utilisateur. Puis, une fois que l'essayage est satisfaisant, la chaussure finale peut être fabriquée à son tour.

Selon un troisième mode de réalisation, comme représenté sur la figure 14, on met en œuvre le procédé ci-dessus, qui n'est pas décrit à nouveau en détail. A la différence du premier mode de réalisation, on fabrique le semelage 35 de la chaussure par fabrication additive. On utilise le modèle numérique 36 de semelage de chaussure pour la fabrication additive. Le matériau constitutif est un matériau plus rigide que celui utilisé pour l'orthèse 31, mais moins rigide que celui utilisé pour le bloc 28. Le cas échéant, le modèle numérique 36 de semelage de chaussure comprend des zones correspondant à différents matériaux, et on procède à une fabrication additive multi-matériaux.

Dans l'exemple de réalisation ci-dessus, on dispose donc d'une chaussure comprenant un semelage 35 réalisé par fabrication additive, et d'une orthèse 31 réalisée par fabrication additive.

Le cas échéant, dans le cadre de l'invention, lors de la mise en œuvre d'une chaussure comprenant un semelage 35 réalisé par fabrication additive, on peut alternativement utiliser tout type adapté d'orthèses, comme des orthèses réalisées par laminage, par exemple.

Selon un quatrième mode de réalisation, on utilise la station de travail 17 pour réaliser un modèle numérique de chaussure. Celui-ci est généré à partir du modèle numérique de bloc. Comme discuté ci-dessus, on peut réaliser un modèle numérique de semelage à partir de la partie inférieure du modèle numérique de forme. On peut réaliser un modèle numérique de tige à partir de la partie supérieure du modèle numérique de forme. Le modèle numérique de semelage et le modèle numérique de tige, assemblés, forment un modèle numérique de chaussure personnalisée. Ce modèle numérique peut être transmis à la machine de fabrication additive 27 pour fabrication additive. Une telle réalisation est rendue possible par la grande précision et reproductibilité de la prise d'images.

## Revendications

1. Procédé de fabrication d'un composant enveloppant (34, 35) pour une chaussure sur-mesure comprenant les étapes suivantes :
- à partir d'un modèle numérique (15) du membre inférieur (38) de l'utilisateur (39), la génération, au moyen d'un processeur (20), d'un modèle numérique (30) d'une orthèse (31) de la chaussure sur mesure associée au membre inférieur (38) de l'utilisateur (39),
- la transmission du modèle numérique (30) de l'orthèse (31) de la chaussure sur mesure à un processeur (41) d'une machine de fabrication additive (27) ;
- la génération d'un modèle numérique (25) de bloc (28, 50) correspondant à un assemblage du modèle numérique (30) de l'orthèse (31) de la chaussure sur mesure et du modèle numérique (15) du membre inférieur (38) de l'utilisateur ;
- la réalisation d'un composant enveloppant (34, 35) au moins en partie le bloc (28, 50),
le composant enveloppant étant adapté à l'orthèse (31) associée au membre inférieur (38) de l'utilisateur (39).

2. Procédé de fabrication selon la revendication 1, dans lequel la réalisation du composant enveloppant comprend les opérations suivantes :
- la réalisation d'un modèle numérique du composant enveloppant (34, 35) à partir d'au moins une partie de la surface extérieure du modèle numérique (25) de bloc (28, 50) ;
- la transmission du modèle numérique du composant enveloppant (34, 35) à un processeur d'une machine de fabrication additive (27).

3. Procédé de fabrication selon la revendication 1, dans lequel la réalisation du composant enveloppant (34, 35) comprend les opérations suivantes :
- la transmission du modèle numérique (25) de bloc (28, 50) à un processeur d'une machine de fabrication additive ;
- la mise en œuvre de la machine de fabrication additive pour la fabrication du bloc (28, 50) ;
- le recouvrement au moins en partie de la surface extérieure du bloc (28, 50) par un matériau adapté.

4. Procédé selon la revendication précédente, dans lequel le bloc est un bloc d'assemblage (50) qui comprend au moins trois parties disjointes (51, 52, 53), les trois parties comprenant des surfaces (51b, 52b, 53b, 53c) d'assemblage, permettant d'emboîter les parties (51, 52, 53) deux à deux.

5. Procédé de fabrication selon la revendication précédente, dans lequel le bloc d'assemblage (50) comprend une surface supérieure (54) sensiblement plane destinée à servir d'appui pour une presse, et dans lequel dans lequel les surfaces (51b, 52b, 53b, 53c) d'assemblage inclinée par rapport à la surface supérieure d'un angle différent de 90°.

6. Procédé selon la revendication précédente, dans lequel l'angle d'inclinaison des surfaces (51b, 52b, 53b, 53c) d'assemblage est supérieur à 70°.

7. Procédé de fabrication selon l'une quelconque des revendications précédentes, dans lequel on génère un modèle numérique (30) tridimensionnel volumique de l'orthèse (31).

8. Procédé de fabrication selon l'une quelconque des revendications précédentes, dans lequel on génère un modèle numérique (30) tridimensionnel volumique de de l'orthèse (31) comprenant des éléments présentant l'une et/ou l'autre des caractéristiques suivantes :
- des épaisseurs différentes,
- des caractéristiques mécaniques de matériau différentes.

9. Procédé de fabrication selon l'une quelconque des revendications précédentes dans lequel on génère un modèle numérique (30) de l'orthèse (31) comprenant au moins une portion latérale (33a, 33b) s'étendant à partir d'une portion de base (32).

10. Procédé selon la revendication précédente, dans lequel le modèle numérique (30) de l'orthèse (31) comprend au moins un décaissage (33c) sur au moins une portion latérale (33a, 33b), le procédé comprenant la fixation d'un renfort latéral (33d) dans le décaissage latéral (33c).

11. Procédé de fabrication selon l'une quelconque des revendications précédentes, dans lequel le composant enveloppant est une tige (34) de la chaussure, et comprenant la fabrication d'un semelage (35) orthopédique rigide, destiné à être assemblé à la tige (34) de chaussure orthopédique.

12. Procédé de fabrication selon l'une des revendications précédentes, dans lequel une machine de fabrication additive (27) fabrique l'orthèse (31) .

13. Procédé de fabrication selon l'une des revendications précédentes, dans lequel, avant la génération du modèle numérique (30) de l'orthèse (31), on numérise le membre inférieur (38) de l'utilisateur, et on transmet au processeur (20) des données relatives audit membre inférieur de l'utilisateur numérisé.

14. Procédé de fabrication selon l'une des revendications précédentes, dans lequel on numérise le membre inférieur (38) de l'utilisateur avec un dispositif d'acquisition des données (1) qui comprend :
- Un support (2) translucide, comportant une portion d'accueil (3) rigide adaptée pour recevoir la surface inférieure d'un pied de l'utilisateur,
- Un capteur (4) adapté pour mesurer le membre inférieur de l'utilisateur,
- Un guide (5) adapté pour guider le capteur (4) autour du membre inférieur.

15. Procédé de fabrication selon l'une des revendications précédentes, dans lequel on génère le modèle numérique (30) de l'orthèse (31) associé au membre inférieur (38) de l'utilisateur (39) présentant une surface intérieure dont le maillage est le même que celui de la surface extérieure du modèle numérique (15) du membre inférieur (38) de l'utilisateur (39).

16. Programme d'ordinateur comprenant des instructions qui, lorsque le programme est exécuté par un ordinateur, conduisent celui-ci à mettre en œuvre le procédé selon l'une quelconque des revendications précédentes.

## Patentansprüche

1. Verfahren zur Herstellung eines umhüllenden Bestandteils (34, 35) für einen maßgeschneiderten Schuh, das die folgenden Schritte umfasst:
- aus einem digitalen Modell (15) des unteren Gliedmaßes (38) des Benutzers (39) mittels eines Prozessors (20) die Erstellung eines digitalen Modells (30) einer Orthese (31) des maßgeschneiderten Schuhs, die dem unteren Gliedmaß (38) des Benutzers (39) zugeordnet wird,
- die Übertragung des digitalen Modells (30) der Orthese (31) des maßgeschneiderten Schuhs an den Prozessor (41 ) einer additiven Fertigungsmaschine (27);
- die Erstellung eines digitalen Modells (25) eines Blocks (28, 50), das der Zusammenfügung des digitalen Modells (30) der Orthese (31) des maßgeschneiderten Schuhs und des digitalen Modells (15) des unteren Gliedmaßes (38) des Benutzers entspricht;
- die Herstellung eines Bestandteils, das den Block (28, 50) zumindest teilweise umhüllt (34, 35), wobei das umhüllende Bestandteil an die Orthese (31) angepasst ist, die dem unteren Gliedmaß (38) des Benutzers (39) zugeordnet wird.

2. Fertigungsverfahren nach Anspruch 1, bei dem die Herstellung des umhüllenden Bestandteils die folgenden Schritte umfasst:
- die Erstellung eines digitalen Modells des umhüllenden Bestandteils (34, 35) aus mindestens einem Teil der Außenfläche des digitalen Modells (25) des Blocks (28, 50);
- die Übertragung des digitalen Modells des umhüllenden Bestandteils (34, 35) an den Prozessor einer additiven Fertigungsmaschine (27);

3. Fertigungsverfahren nach Anspruch 1, bei dem die Herstellung des umhüllenden Bestandteils (34, 35) die folgenden Schritte umfasst:
- die Übertragung des digitalen Modells (25) des Blocks (28, 50) an den Prozessor einer additiven Fertigungsmaschine;
- der Einsatz der additiven Fertigungsmaschine für die Fertigung des Blocks (28, 50);
- das Abdecken zumindest eines Teils der Außenfläche des Blocks (28, 50) mit einem geeigneten Material.

4. Verfahren nach dem vorhergehenden Anspruch, wobei der Block ein Montageblock (50) ist, der mindestens drei voneinander getrennte Teile (51, 52, 53) umfasst, wobei die drei Teile Montageflächen (51b, 52b, 53b, 53c) umfassen, die es ermöglichen, die Teile (51, 52, 53) paarweise ineinander zu stecken.

5. Fertigungsverfahren nach dem vorhergehenden Anspruch, wobei der Montageblock (50) eine im Wesentlichen ebene obere Fläche (54) umfasst, die als Auflage für eine Presse dienen soll, und in dem die Montageflächen (51b, 52b, 53b, 53c) in Bezug auf die obere Fläche um einen von 90° abweichenden Winkel geneigt sind.

6. Verfahren nach dem vorhergehenden Anspruch, bei dem der Neigungswinkel der Montageflächen (51b, 52b, 53b, 53c) größer als 70° ist.

7. Fertigungsverfahren nach einem der vorhergehenden Ansprüche, bei dem ein dreidimensionales digitales Modell (30) der Orthese (31) erzeugt wird.

8. Fertigungsverfahren nach einem der vorhergehenden Ansprüche, bei dem ein dreidimensionales digitales Modell (30) der Orthese (31) erzeugt wird, das Elemente umfasst, die das eine oder/und das andere der folgenden Merkmale aufweisen:
- unterschiedlichen Dickenabmessungen,
- unterschiedliche mechanische Materialeigenschaften.

9. Fertigungsverfahren nach einem der vorhergehenden Ansprüche, bei dem ein digitales Modell (30) der Orthese (31) erzeugt wird, das mindestens einen Seitenabschnitt (33a, 33b) umfasst, der sich von einem Basisabschnitt (32) aus erstreckt.

10. Verfahren nach dem vorhergehenden Anspruch, wobei das digitale Modell (30) der Orthese (31) mindestens eine Aussparung (33c) an mindestens einem Seitenabschnitt (33a, 33b) umfasst, wobei das Verfahren aus dem Befestigen einer seitlichen Verstärkung (33d) in der seitlichen Aussparung (33c) besteht.

11. Fertigungsverfahren nach einem der vorhergehenden Ansprüche, bei dem der umhüllende Bestandteil ein Schaft (34) des Schuhs ist, und das Fertigen einer steifen orthopädischen Einlage (35) umfasst, die mit dem Schaft (34) des orthopädischen Schuhs verbunden werden soll.

12. Fertigungsverfahren nach einem der vorhergehenden Ansprüche, bei dem eine additive Fertigungsmaschine (27) die Orthese (31) herstellt.

13. Fertigungsverfahren nach einem der vorhergehenden Ansprüche, bei dem vor der Erzeugung des digitalen Modells (30) der Orthese (31) das untere Gliedmaß (38) des Benutzers digitalisiert wird und Daten, die sich auf das digitalisierte untere Gliedmaß des Benutzers beziehen, an den Prozessor (20) übertragen werden.

14. Fertigungsverfahren nach einem der vorhergehenden Ansprüche, bei dem das untere Gliedmaß (38) des Benutzers mit einer Datenerfassungsvorrichtung (1) digitalisiert wird, bestehend aus:
- Eine lichtdurchlässige Stütze (2) mit einem steifen Aufnahmeteil (3), der so beschaffen ist, dass er die Unterseite des Fußes des Benutzers aufnehmen kann,
- Ein Sensor (4), der dazu geeignet ist, das untere Gliedmaß des Benutzers zu messen,
- Eine Führung (5), die dazu geeignet ist, den Sensor (4) um das untere Gliedmaß herum zu führen.

15. Fertigungsverfahren nach einem der vorhergehenden Ansprüche, bei dem das digitale Modell (30) der Orthese (31), die dem unteren Gliedmaß (38) des Benutzers (39) zugeordnet ist, erzeugt wird, bestehend aus einer Innenfläche, deren Maschenweite die gleiche ist wie die der Außenfläche des digitalen Modells (15) des unteren Gliedmaßes (38) des Benutzers (39).

16. Computerprogramm bestehend aus Anweisungen, die, wenn das Programm von einem Computer ausgeführt wird, den Computer veranlassen, das Verfahren nach einem der vorhergehenden Ansprüche.

## Claims

1. Manufacturing process for an enveloping component (34, 35) for a custom-made shoe including the following stages:
- from the digital model (15) of the lower limb (38) of the user (39), the generation, through a processor (20), of a numeric model (30) of a brace (31) of the custom-made shoe associated with the lower limb (38) of the user (39);
- the transfer of the digital model (30) of the brace (31) of the custom-made shoe to the processor (41) of an additive manufacturing machine (27);
- the generation of a digital (25) model of a block (28, 50) corresponding to an assembly of the digital model (30) of the brace (31) of the custom-made shoe and of the digital model (15) of the lower limb (38) of the user;
- the manufacturing of a component enveloping (34, 35), at least in part, the block (28, 50), with the enveloping component being adapted to the brace (31) associated with the lower limb (38) of the user (39).

2. Manufacturing process according to claim 1, in which the manufacture of an enveloping component includes the following operations:
- the making of a digital model of an enveloping component (34, 35) from at least one part of the outer surface of the digital model (25) of the block (28, 50);
- the transfer of the digital model of the enveloping component (34, 35) to the processor of an additive manufacturing machine (27).

3. Manufacturing process according to claim 1, in which the manufacture of an enveloping component (34, 35) includes the following operations:
- the transfer of the digital model (25) of the block (28, 50) to the processor of an additive manufacturing machine;
- the implementation of the additive manufacturing machine for the manufacture of the block (28, 50);
- the overlaying, at least in part, of the outer surface of the block (28, 50) by a suitable material.

4. Process according to the preceding claim, in which the block is an assembly block (50) that includes at least three separate parts (51, 52, 53); the three parts including assembly surfaces (51b, 52b, 53b, 53c), enabling the parts (51, 52, 53) to be interlocked two by two.

5. Manufacturing process according to the preceding claim, in which the assembly block (50) includes a substantially flat upper surface (54) to serve as a support for a press, and in which the assembly surfaces (51b, 52b, 53b, 53c) are tilted with regard to the upper surface at a different angle of 90°.

6. Process according to the preceding claim, in which the tilt angle of the assembly surfaces (51b, 52b, 53b, 53c) is greater than 70°.

7. Manufacturing process according to any of the preceding claims, in which a volumetric three-dimensional digital model (30) of the brace (31) is generated.

8. Manufacturing process according to any of the preceding claims, in which a volumetric three-dimensional digital model (30) of the brace (31) is generated, including elements with one and/or another of the following characteristics:
- different thicknesses,
- mechanical characteristics of different materials.

9. Manufacturing process according to any of the preceding claims, in which a digital model (30) of the brace (31) is generated, including at least one lateral section (33a, 33b) extending from a section of the base (32).

10. Manufacturing process according to the preceding claim, in which a digital model (30) of the brace (31) includes at least one recess (33c) on at least one lateral section (33a, 33b), with the process including the fixing of a lateral support (33d) in the lateral recess (33c).

11. Manufacturing process according to any of the preceding claims, in which the enveloping component is an upper (34) of the shoe, and includes the manufacture of a rigid orthopaedic sole (35), to be attached to the upper (34) of the orthopaedic shoe.

12. Manufacturing process according to any of the preceding claims, in which an additive manufacturing machine (27) manufactures the brace (31).

13. Manufacturing process according to any of the preceding claims, in which, prior to generation of the digital model (30) of the brace (31), the lower limb (38) of the user is digitised, and data relating to said lower limb of the digitised user is transferred to the processor (20).

14. Manufacturing process according to any of the preceding claims, in which the lower limb (38) of the user is digitised with a data acquisition device (1) that includes:
- A transparent support (2), including a rigid host section (3) adapted to receive the lower surface of the foot of the user,
- A sensor (4) adapted to measure the lower limb of the user,
- A guide (5) adapted to guide the sensor (4) around the lower limb.

15. Manufacturing process according to any of the preceding claims, in which a digital model (30) of the brace (31) associated with the lower limb (38) of the user (39), with an inner surface whose mesh is the same as that of the outer surface of the digital model (15) of the lower limb (38) of the user (39), is generated.

16. Computer programme including instructions that, when the programme is executed by a computer, lead the latter to implement the process according to any one of the preceding claims.
